# EUROPEAN PATENT APPLICATION

(11) **EP 4 207 083 A1**
(43) Date of publication of application: **05.07.2023**
(21) Application number: 21884660.8
(22) Date of filing: 31.08.2021
(51) Int. Cl.: G06T 17/20, G06T 15/20, G06T 7/20

(54) **ELASTIC OBJECT RENDERING METHOD AND APPARATUS, DEVICE, AND STORAGE MEDIUM**

(30) Priority: 28.10.2020 CN 202011169108
(71) Applicant: Beijing Zitiao Network Technology Co., Ltd., Beijing 100190 (CN)
(72) Inventor: WANG, Jinglei, Beijing 100190 (CN); E, Yanzhi, Beijing 100190 (CN); FENG, Yufei, Beijing 100190 (CN); LIU, Feipeng, Beijing 100190 (CN)
(74) Representative: Dentons UK and Middle East LLP
(86) International application number: PCT/CN2021/115591
(87) International publication number: WO 2022/088928

(57) **Abstract**

The present disclosure relates to an elastic object rendering method and apparatus, a device, and a storage medium. The method comprises: constructing a grid model of an elastic object; in response to a deformation trigger operation for the elastic object, first determining the deformation position and speed of an acted point in the grid model of the elastic object under the deformation trigger operation; determining the motion trajectory of each grid point in the grid model of the elastic object according to the deformation position and speed of the acted point, and the elastic constraint of each grid point in the grid model of the elastic object; and finally, according to the motion trajectory of each grid point in the grid model of the elastic object, invoking the grid model of the elastic object to perform elastic motion. Therefore, the present disclosure can simulate and dynamically display the whole process of the elastic deformation of the elastic object due to stress, can provide a vivid elastic effect, improves interactivity with a user, and improves the user experience.

## Description

The present application claims priority to Chinese Patent Application No. 202011169108.5, titled "ELASTIC OBJECT RENDERING METHOD AND APPARATUS, DEVICE, AND STORAGE MEDIUM", filed on October 28, 2020 with the China National Intellectual Property Administration, which is incorporated herein by reference in its entirety.

### FIELD

The present disclosure relates to the technical field of image rendering, and in particular to a method and apparatus for rendering an elastic object, a device, and a storage medium.

### BACKGROUND

The methods for realizing dynamic special effects in the related art mainly include three methods: skeletal animation, blend deformation (or referred to as BlendShape) and vertex animation. However, realistic elastic effects cannot be realized by using the three methods, and no user interaction is involved, resulting in poor user experience.

### SUMMARY

In order to solve or at least partially solve the above technical problems, a method and apparatus for rendering an elastic object, a device and a storage medium are provided according to the embodiments of the present disclosure, which can provide realistic elastic effects, improving interactivity with users, thereby improving the user experience.

A method for rendering an elastic object is provided according to a first aspect of the embodiments of the present disclosure. The method includes:
constructing a mesh model of an elastic object;
determining, in response to a deformation triggering operation applied on the elastic object, a deformation position and a velocity of an action point in the mesh model of the elastic object under action of the deformation triggering operation, where the deformation triggering operation is used to trigger a deformation of the elastic object under the action, and the action point is a mesh point in the elastic object that deviates from an original position under the action;
determining a motion trajectory of mesh points in the mesh model of the elastic object based on the deformation position and the velocity of the action point and an elastic constraint between the mesh points in the mesh model of the elastic object; and
implementing an elastic movement of the mesh model of the elastic object based on the motion trajectory of the mesh points in the mesh model of the elastic object.

A rendering apparatus is provided according to a second aspect of the embodiments of the present disclosure. The apparatus includes a model construction module, a first determination module, a second determination module and an execution module.

The model construction module is configured to construct a mesh model of an elastic object.

The first determination module is configured to determine, in response to a deformation triggering operation applied on the elastic object, a deformation position and a velocity of an action point in the mesh model of the elastic object under action of the deformation triggering operation, where the deformation triggering operation is used to trigger a deformation of the elastic object under the action, and the action point is a mesh point in the elastic object that deviates from an original position under the action.

The second determination module is configured to determine a motion trajectory of mesh points in the mesh model of the elastic object based on the deformation position and the velocity of the action point and an elastic constraint between the mesh points in the mesh model of the elastic object.

The execution module is configured to implement an elastic movement of the mesh model of the elastic object based on the motion trajectory of the mesh points in the mesh model of the elastic object.

A terminal device is provided according to a third aspect of the embodiments of the present disclosure. The terminal device includes a memory and a processor, where computer programs are stored in the memory, and the computer programs, when being executed by the processor, may perform the foregoing method according to the first aspect.

A computer-readable storage medium is provided according to a fourth aspect of the embodiments of the present disclosure. Computer programs are stored in the storage medium, and the computer programs, when being executed by a processor, may perform the foregoing method according to the first aspect.

Compared with the conventional technology, the technical solution according to the embodiments of the present disclosure has the following advantages.

According to the technical solution according to the embodiments of the present disclosure, a mesh model of an elastic object is constructed; a deformation position and a velocity of an action point in the mesh model of the elastic object under action of the deformation triggering operation is determined in response to a deformation triggering operation applied on the elastic object; a motion trajectory of mesh points in the mesh model of the elastic object is determined based on the deformation position and the velocity of the action point and an elastic constraint between the mesh points in the mesh model of the elastic object; and finally an elastic movement of the mesh model of the elastic object is implemented based on the motion trajectory of the mesh points in the mesh model of the elastic object. It can be seen that with the solution according to the embodiments of the present disclosure, the entire process of elastic deformation of an elastic object under the action can be simulated and dynamically displayed and realistic elastic effects can be provided, improving interactivity with users, and improving the user experience.

In addition, according to the technical solution according to the embodiments of the present disclosure, only some representative points (such as points on the surface of a counterpart, or points depicting the outline of a counterpart) among points constituting a counterpart are projected into a virtual world, as the mesh points on the mesh model of the elastic object, which can greatly reduce the number of the mesh points in the mesh model, reduce the complexity of subsequent calculations, and reduce the dependence of calculations on hardware performance, and is especially applicable to miniaturized devices with poor computability such as mobile phones, smart watches.

### BRIEF DESCRIPTION OF THE DRAWINGS

The accompanying drawings, which are incorporated in and constitute a part of the specification, illustrate embodiments consistent with the present disclosure and serve to explain the principles of the present disclosure together with the description.

In order to more clearly illustrate the technical solutions in the embodiments of the present disclosure or in the conventional technology, the accompanying drawings used in the description of the embodiments or the conventional technology will be briefly introduced hereinafter. Apparently, other drawings can be obtained for those skilled in the art based on these drawings without any creative efforts.
Figure 1 is a flowchart of a method for rendering an elastic object according to an embodiment of the present disclosure;
Figure 2 is a schematic diagram of a shape of an elastic object according to an embodiment of the present disclosure;
Figure 3 is a schematic diagram showing marking mesh points of Figure 2;
Figure 4 is a schematic diagram of a touch sliding operation performed by a user according to an embodiment of the present disclosure;
Figure 5 is a schematic diagram of a touch sliding operation performed by a user according to another embodiment of the present disclosure;
Figure 6 is a schematic diagram of a touch sliding operation performed by a user according to another embodiment of the present disclosure;
Figure 7 is a flowchart of a method for rendering an elastic object according to another embodiment of the present disclosure;
Figure 8 is a structural block diagram of a rendering apparatus according to an embodiment of the present disclosure; and
Figure 9 is a schematic structural diagram of a terminal device according to an embodiment of the present disclosure.

### DETAILED DESCRIPTION

In order to more clearly understand the above objects, features and advantages of the present disclosure, the solutions of the present disclosure will be further described hereinafter. It should be noted that the embodiments of the present disclosure and the features in the embodiments may be combined with each other without conflicts.

Specific details are set forth in the following description to facilitate substantially understanding the present disclosure, but the present disclosure may also be implemented in other ways different from those described herein. Apparently, the embodiments in the description are only a part of the embodiments of the present disclosure, rather than all embodiments.

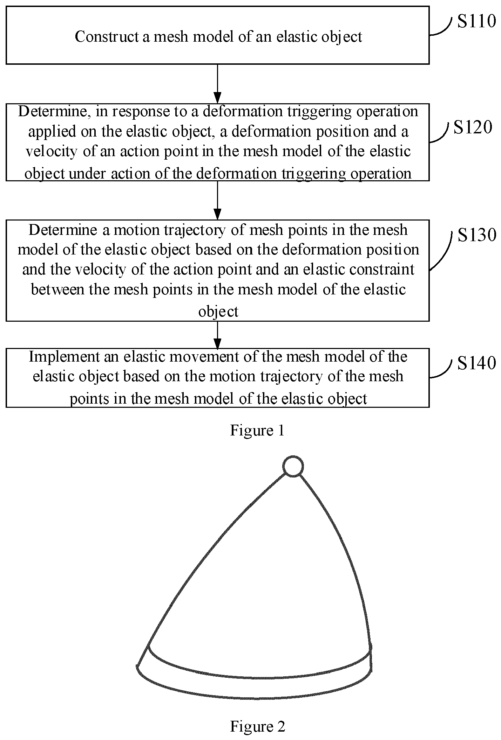

Figure 1 is a flowchart of a method for rendering an elastic object according to an embodiment of the present disclosure. The method may be executed by a terminal device. The terminal device may be exemplarily understood as a device having a capability of playing video or animation, such as a mobile phone, a tablet computer, a notebook computer, a desktop computer, and a smart TV. In some embodiments, the terminal device referred to in the present embodiment may be equipped with a display device and a human-computer interaction device. The terminal device may receive user instructions through the human-computer interaction device, and present an appropriate response by means of the display device based on the user instructions, for example, a specific dynamic 3D elastic effect is displayed on the display device. The technical solution according to the present disclosure may be applied to the situation of recording and editing a video, and may also be applied to a situation in which multiple persons interact (e.g., making a video call) through terminals. Of course, the technical solution according to the present disclosure may also be applied to other situations, which are not limited in the present disclosure.

As shown in Figure 1, the method according to the present embodiment includes the following steps S110 to S140.

In S110, a mesh model of an elastic object is constructed.

In the present embodiment, the mesh model of the elastic object may be constructed based on 3D model data of the elastic object, where the 3D model data of the elastic object may be configured in advance.

In this step, the elastic object is rendered on an interface of a terminal device, where the interface refers to a display interface of a terminal. Specifically, the interface may be a usage interface of an application program installed on the terminal, such as an interface of video call, an interface of video recording, an interface of video editing and an interface of video playing.

The elastic object refers to an object displayed in the interface for which an elastic dynamic effect may be displayed in response to a user operation. Exemplarily, in a case that the interface is an interface of video editing, an interface of video call, or an interface of video playing, the elastic object may be a prop added as a special effect element. In some embodiments, the elastic object may be configured to correspond to a real world object (hereinafter referred to as a counterpart). Exemplarily, the elastic object is a hat-shaped prop, a scarf-shaped prop, a headgear-shaped prop, a ball-shaped prop, or the like.

From microscopic viewpoint, a real world object is composed of a large number of microscopic particles such as particles, atoms or molecules. Due to the interactive forces between the microscopic particles, the object may restore its original size and shape after being deformed, that is, the object has elasticity. By corresponding the elastic object to the real world object, the real world object is projected into the virtual world, or it is referred to as simulating the real world object by using the elastic object, which gives the user a sense of reality and emotional resonance.

It can be understood by those skilled in the art that, if the counterpart in the real world, which is regarded as a set of points, is pulled and deformed, the deformation is essentially the change of relative positions between the points that constitute the counterpart. In view of this, the elastic object may be configured to include multiple mesh points. The mesh points are used to describe the topography of the elastic object.

In addition, the counterpart in the real world is three-dimensional, and therefore the points constituting the counterpart include points depicting a surface of the counterpart and points depicting the interior of the counterpart. The points depicting the surface of the counterpart and the points depicting the interior of the counterpart collectively constitute the counterpart.

However, in the technical solution according to the present disclosure, since the elastic object mainly serves to decorate an image in practical usage, the internal structure of the elastic object may be neglected. For example, in a case of putting on a hat on an image of a character in the interface, it is only required to superimpose the image of the hat on the image of the character, and it is not required to fully display the interior of the hat. Therefore, in a possible embodiment, only representative points are selected as the mesh points. That is, in the determination of the mesh points, only some representative points among the points constituting the counterpart are projected into the virtual world as the mesh points of the elastic object. The "representative points" may be points that depict the surface of the counterpart, or points that depict an outline of the counterpart.

In subsequent calculation, velocity and position of the mesh points are calculated, to finally obtain a dynamic effect of the elastic object. By only projecting some representative points among the points constituting the counterpart into the virtual world as the mesh points of the elastic object, the number of the mesh points may be reduced greatly, reducing the complexity of subsequent calculations and reducing the dependence of calculations on hardware performance. Therefore, the method is especially applicable to miniaturized devices with poor computability, such as mobile phones and smart watches.

In addition, there are interactive forces between microscopic particles that constitute the counterpart in the real world. To simulate the interactive forces between the microscopic particles in the counterpart in the real world, an elastic constraint is configured between different mesh points. The elastic constraint may be specifically expressed using a constraint rule and/or a constraint condition. The constraint rule and/or the constraint condition may be determined from mechanical analysis of the real world counterpart of the elastic object.

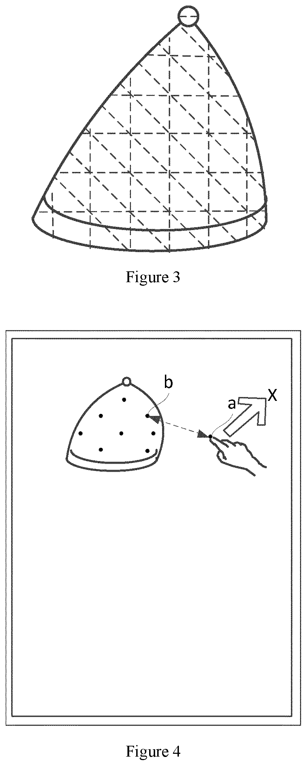

The mesh points may be set in multiple methods, which are not limited in the present disclosure. Exemplarily, for an elastic object which is the hat-shaped prop in Figure 2, a method for setting mesh points as shown in Figure 3 may be used. The method for setting mesh points may include: drawing meshes on a surface of the elastic object, and taking intersections of lines constituting the meshes as the mesh points. Straight lines or curved lines may be used to draw the meshes. Different meshes may have the same shape or different shapes. Figure 2 is a schematic diagram of a shape of an elastic object according to an embodiment of the present disclosure. Figure 3 is a schematic diagram showing marking the mesh points of Figure 2.

In addition, the implementation of S110 is not limited in the embodiment of the present disclosure. For example, in a possible implementation, S110 may include: acquiring an elastic object adding instruction inputted by a user; and in response to the elastic object adding instruction, constructing a mesh model of the elastic object and displaying the added elastic object on an interface to be edited.

In S120, a deformation position and a velocity of an action point in the mesh model of the elastic object under action of the deformation triggering operation are determined, in response to a deformation triggering operation applied on the elastic object.

The deformation triggering operation in the step is applied on the elastic object, so that the elastic object is deformed, and the action point is a mesh point in the elastic object that deviates from an original position due to the applied action.

The motion of the action point may be regarded as the motion directly caused by the deformation triggering operation (e.g., a pulling operation) of the user. The motion of other mesh points in the mesh model of the elastic object, except the action point, is the motion generated by the motion of the action point and the limitation of a predetermined elastic constraint.

The deformation triggering operation applied by the user on the elastic object may be obtained through a device such as a touch screen. In a possible implementation, if the touch screen is reused as a display device in the terminal, the user may directly perform the deformation triggering operation on the display device.

In addition, the "deformation triggering operation applied by the user on the elastic object" is not limited in the embodiments of the present disclosure. For example, in a possible implementation, the deformation triggering operation applied by the user on the elastic object may include a touch sliding operation. A touch point corresponding to the touch sliding operation is used to determine the action point, and a sliding trajectory corresponding to the touch sliding operation is used to determine the deformation position and the velocity of the action point. Exemplarily, the method for a user to perform the deformation triggering operation on the elastic object may include: the user touches a certain area (hereinafter referred to as a touched area) on the display device with a finger, and moves the finger in a certain direction. It should be noted that, in practice, in the touching and sliding, the user may exert pressure to the display device, or may not exert pressure to the display device. If the user exerts pressure on the display device, the touch operation of the user may be recognized by using a pressure sensor. If the user does not exert pressure on the display device, the touch operation of the user may be recognized by using an optical sensor.

In practice, using a touch sliding to trigger the deviation of the action point from the original position mainly includes two situations.

In a first case, the touched area does not overlap with an area covered by the elastic object. That is, the touch point corresponding to the touch sliding operation is not located on the elastic object, but on other areas in the touch interface beyond the area covered by the elastic object. In this case, the action point may be set as a predetermined mesh point on the elastic object, and the touch sliding operation that the user acts on the interface is mapped to the predetermined mesh point. For ease of understanding, the following description is made with reference to Figure 4. Figure 4 is a schematic diagram of a touch sliding operation performed by a user according to an embodiment of the present disclosure.

As shown in Figure 4, in a case that the mesh point b in the elastic object is defined in advance as the predetermined mesh point, and a practical operation that the user touches point a and moves along the X direction may be mapped as an operation that the user touches point b and moves along the X direction.

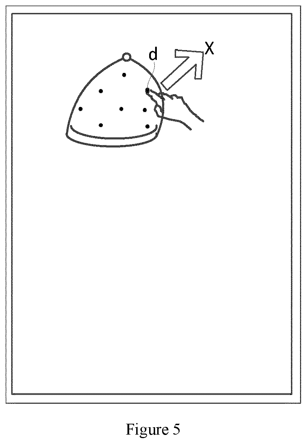

In a second case, the touched area at least partially overlaps with the area covered by the elastic object. That is, the touch point corresponding to the touch sliding operation is located on the elastic object. In this case, the action point may be set as the mesh point corresponding to the touch point in the mesh model of the elastic object, and the touch sliding operation that the user acts on the interface is mapped to the mesh point. For ease of understanding, the following description is made with reference to Figure 5. Figure 5 is a schematic diagram of a touch sliding operation performed by a user according to another embodiment of the present disclosure.

As shown in Figure 5, in a case that a practical operation corresponding to a user input pulling instruction for the elastic object is to touch point d and move along the X direction, since the point d per se is a mesh point of the elastic object, the point d may be treated as the action point.

It should be noted that, since the user's finger actually touches the display device at relatively large area and there may be multiple mesh points in the touched area, all or some of the mesh points in the touched area may be selected as the action points for the second case. The present disclosure is not limited in this aspect. Further, in a case that some mesh points in the touched area are selected as the action points, the selection may be implemented as determining the action points based on pressures detected at physical positions of the mesh points on the screen. For example, the mesh point at the physical position having the maximum pressure is used as the action point. Alternatively, a geometric center of the touched area may be determined firstly, and the action point may be determined based on a distance between each of the mesh points and the geometric center. For example, the mesh point with the closest distance from the geometric center is determined as the action point.

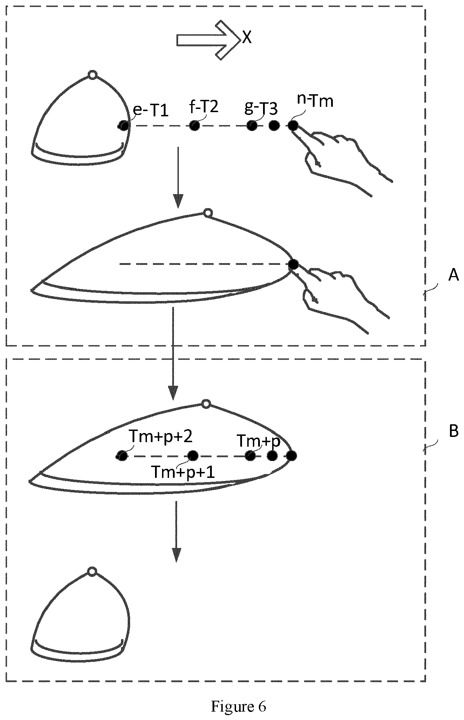

In the present disclosure, dynamic rendering is performed for the elastic object, and the elasticity is defined as capability to restore the original size and shape after being deformed. Therefore, the entire process of deformation of the elastic object is divided into two stages. In the first stage, the user touches the display device, and the elastic object is deformed through the touch sliding operation. In the second stage, the user's finger leaves the display device and no longer acts on the elastic object, and the elastic object returns to its original shape. For ease of understanding, the following description is made with reference to Figure 6. Figure 6 is a schematic diagram of a touch sliding operation performed by a user according to another embodiment of the present disclosure.

As shown in Figure 6, it is assumed that the area touched by the finger covers a mesh point e of the hat-shaped elastic object, and the mesh point e is used as the action point. The first stage A corresponds to the process that the user touches and moves the finger along the X direction, then stops at point n, and the finger leaves the display device. In this stage, the display device displays that the mesh point e of the hat-shaped elastic object moves to the point n as the finger slides, and the overall shape of the hat-shaped elastic object changes. In the second stage B, the finger of the user leaves the display device, and the hat-shaped elastic object returns to its original state under the action of "elasticity".

For the first stage, in a possible implementation, when the user performs the touch sliding operation, a sliding velocity and a sliding distance applied by the user may be mapped to the action point to obtain the velocity and the deformation position of the action point.

From microscopic viewpoint, the sliding trajectory is a set of points where the finger is located at different motion moments. Therefore, the sliding trajectory may be obtained by sequentially connecting the positions of the fingers in a time sequence. Reference is still made to Figure 6, it is assumed that the finger slides along the X direction, point e, point f, point g, ..., and point n each is a point on the sliding trajectory, and the point e is the position of the finger at an initial moment of sliding. The finger reaches the point e at a moment of T1, reaches the point f at a moment of T2, and reaches the point e at a moment of T3,..., and reaches the point n at a moment of Tm. As long as the moments when the finger reaches the points (that is, specific values of T1, T2, T3,..., Tm) and position coordinates of the points are known, the sliding velocity applied by the user at each moment and the sliding distance applied by the user at each moment may be obtained. Exemplarily, the moment when the finger reaches any point and the position coordinates of any point may be detected by using a pressure sensor or an optical sensor in the display device. This is because a display device with a touch function or a light-sensing function is usually provided with a large number of pressure sensors or optical sensors scattered therein, and different pressure sensors or optical sensors have different coordinates. When the user touches the display device, only the pressure sensor or the optical sensor in the area covered by the finger responds and outputs an electrical signal.

It should further be noted that, in practice, since the sliding velocity and the sliding distance applied by the user are required to be mapped to the action point, a scale parameter may be set in the mapping, and the sliding velocity and the sliding distance of the action point may be calculated based on the scale parameter to complete the mapping operation. Exemplarily, reference is still made to Figure 6, assuming that the distance from the point e to the point n is set as 5cm, and the scale parameter is set as 1, when the user's finger slides from the point e to the point n, the mesh point determined based on the point e moves in a distance of 1×5cm=5cm. In practice, the scale parameter may be set as any value, for example, may be a number greater than 1, a positive number less than 1, or a negative number. In a possible implementation, the value of the scale parameter may be set as a random number. For example, for the same elastic object, the method for rendering an elastic object according to the present disclosure is used twice in a row with different values of the scale parameter. The interest of the special effect may be increased by setting the scale parameter. Similarly, a maximum distance and a minimum distance that the action point is allowed to move before and after being pulled, or the like may be set.

For the second stage, there are multiple methods for determining the velocities and the deformation positions of the action point at motion moments subsequent to a moment when the sliding stops. For example, the velocities and/or the deformation positions at respective motion moments subsequent to the moment when the sliding stops are set in advance.

In a possible implementation, in a case that the user lifts his finger to stop the touch sliding operation, the velocities and the deformation positions of the action point at respective motion moments subsequent to the moment when the touch sliding operation is stopped are determined based on the velocity and the deformation position of the action point at the moment when the touch operation stops. In essence, such a setting is to infer the subsequent velocity and deformation position based on the velocity and the deformation position of the action point at the moment when the touch sliding is stopped, which makes the presented elastic effect more natural and real.

There are multiple methods for inferring the subsequent velocity and deformation position of the action point based on the velocity and the deformation position of the action point at the moment when the touch sliding is stopped. Exemplarily, two methods are described hereinafter.

In a first method, the velocity and the position of the action point after the touching sliding is stopped are determined based on the deformation position and the velocity of the action point when the touch sliding is stopped and a predetermined gravity at the action point.

The real world concrete objects have mass and are subject to gravity in space. In the present disclosure, mesh points are used to describe the appearance of the elastic object, and each mesh point may be given a predetermined gravity to simulate the counterpart in the real world. In actual setting, the predetermined gravity at different mesh points may be the same or different, which is not limited in the present disclosure. In different situations (such as before and after adjusting the placement angle of the terminal), the predetermined gravity at the same mesh point may be the same or different. Exemplarily, if the terminal is placed horizontally (that is, the display surface of the terminal is parallel to the ground), all mesh points have the same predetermined gravity. If the terminal is placed vertically (that is, the display surface of the terminal is perpendicular to the ground), the smaller the distance from the mesh point to the ground is, the greater the predetermined gravity is.

The influence of gravity on the process of the elastic object restoring to the original shape is fully considered in the first method, which makes the elastic effect presented by the elastic object in the second stage more natural and real.

In a second method, force information on the action point at the deformation position is determined based on the deformation position of the action point when the touch sliding is stopped and an elastic constraint between the action point and other mesh points; and the velocity and the deformation position of the action point after the touch sliding is stopped is determined based on the deformation position, the velocity and the force information on the action point when the touch sliding is stopped.

As described above, in the real world, the interactive forces between the microscopic particles that constitute an object enable the object to restore its original size and shape after being deformed, that is, the object has elasticity. In essence, the second method is to fully consider the influence of the elastic constraint on the process of the elastic object restoring to the original shape, which makes the elastic effect presented by the elastic object in the second stage more natural and real.

In a possible implementation, in practice, the first method and the second method may be combined to determine the velocities and the positions of the action point at respective motion moments subsequent to the moment when the touch sliding is stopped, so as to further make the elastic effect of the elastic object presented in the second stage more natural and real.

In a possible implementation, on the basis of the second method, "the velocity and the deformation position of the action point after the touch sliding is stopped are determined based on the deformation position, the velocity and the force information of the action point when the touch sliding is stopped" may be specifically implemented in a way that, after the moment when the touch sliding is stopped, the deformation position, the velocity and the force information of the action point at a moment may be determined based on the deformation position, the velocity and the force information of the action point at a previous moment. Exemplarily, reference is still made to Figure 6, the deformation position, the velocity and the force information at a moment Tm+p+1 are determined based on the deformation position, the velocity and the force information at a moment Tm+p. The deformation position, the velocity, and the force information at a moment Tm+p+2 are determined based on the deformation position, the velocity, and the force information at a moment Tm+p+1. The above processes are repeated, and finally the velocities and the deformation positions of the action point at respective motion moments in the second stage are calculated. In essence, the above setting is to calculate the velocities and the deformation positions of the action point at respective motion moments by using iteration and circulation.

In addition, in practice, if triangle meshes are used for simulation, the model may be too soft and have insufficient elasticity. With the above method in which after the moment when the touch sliding is stopped, the deformation position, the velocity and the force information of the action point at a moment are determined based on the deformation position, the velocity and the force information of the action point at a previous moment, each process of problem resolving may be split into multiple calculation substeps (simulation substeps) and rest pose attachment constraints (such as elastic constraint between the mesh point and other mesh points) may be added to the triangular meshes, which significantly enhances the elastic effect.

In S 130, a motion trajectory of mesh points in the mesh model of the elastic object is determined based on the deformation position and the velocity of the action point and an elastic constraint between the mesh points in the mesh model of the elastic object.

In considering that the elastic constraint is a simulation of the force between microscopic particles in the real world object, this step may be specifically implemented as follows.

For the first stage, that is, when the user performs the deformation triggering operation so that the action point on the mesh model of the elastic object deviates from the original position, the deformation positions and the velocities of other mesh points except the action point (hereinafter abbreviated as other mesh points) are determined based on the deformation positions and the velocities of the action point at respective motion moments together with the predetermined elastic constraint between the mesh points on the elastic object.

For the second stage, that is, when the user lifts his finger to stop performing the deformation triggering operation, the deformation positions and the velocities of other mesh points except the action point at respective motion moments after the deformation triggering operation is stopped are determined based on the deformation positions and the velocities of the action point at respective motion moments after the deformation triggering operation is stopped together with the predetermined elastic constraint between the mesh points on the elastic object. Alternatively, the deformation positions and the velocities of other mesh points are determined after the deformation triggering operation is stopped based on the velocities and the deformation positions of other mesh points when the deformation triggering operation is stopped by the user together with the predetermined elastic constraints between the mesh points on the elastic object.

Based on the above content related to the S130, a motion trajectory of the mesh points may be obtained based on the deformation positions and the velocities of the mesh points on the mesh model at different motion moments.

In S140, an elastic movement of the mesh model of the elastic object is implemented based on the motion trajectory of the mesh points in the mesh model of the elastic object.

In essence, the step is to adjust the deformation positions and the velocities of the mesh points in sequence based on the deformation positions and the velocities of the mesh points on the mesh model at different motion moments and in accordance with the sequence of the motion moments, and present the effect on the display device.

This step may be implemented in various ways, which is not limited in the present disclosure. Exemplarily, firstly, a refresh frequency of the current terminal display is obtained, where the refresh frequency of the terminal display refers to how many times an image is displayed by the display device in one second; then, the deformation positions and the velocities of the mesh points in the mesh model of the elastic object each time the image is displayed are determined based on the refresh frequency of the current terminal display; subsequently, pixel units corresponding to the mesh points in the mesh model of the elastic object each time the image is displayed are determined; finally, pixel voltages of respective pixel units are adjusted to finally display the deformation process of the elastic object on the display device.

In the above technical solution, a mesh model of an elastic object is constructed; in response to a deformation triggering operation applied on the elastic object, a deformation position and a velocity of an action point in the mesh model of the elastic object, under action of the deformation triggering operation, are determined; a motion trajectory of mesh points in the mesh model of the elastic object is determined based on the deformation position and the velocity of the action point and an elastic constraint between the mesh points in the mesh model of the elastic object; and an elastic movement of the mesh model of the elastic object is implemented based on the motion trajectory of the mesh points in the mesh model of the elastic object. The entire process of elastic deformation of the elastic object under the action can be simulated and dynamically displayed and realistic elastic effects can be provided, improving interactivity with users, and improving the user experience.

In addition, in the above technical solution, only some representative points (such as points depicting the surface of the counterpart, or points depicting the outline of the counterpart) among the points constituting a counterpart are project into the virtual world as the mesh points of the elastic object, which can greatly reduce the number of the mesh points, reduce the complexity of subsequent calculations, and reduce the dependence of calculations on hardware performance, and is especially applicable to miniaturized devices with poor computability such as mobile phones, smart watches.

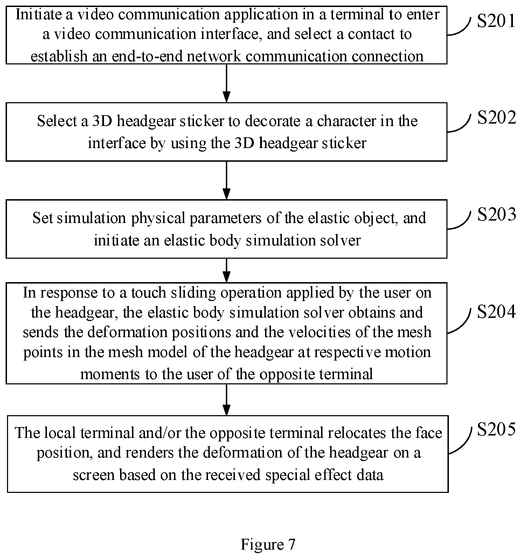

In order to better understand the technical solution according to the present disclosure, the method for rendering an elastic object shown in Figure 7 is described below as an example. Figure 7 is a flowchart of another method for rendering an elastic object according to an embodiment of the present disclosure.

As an example, Figure 7 is a specific example in which the method for rendering an elastic object as shown in Figure 1 is applied to a video communication interface. The method for rendering an elastic object as shown in Figure 7 includes S201 to S205.

In S201, a video communication application in a terminal is initiated to enter a video communication interface, and a contact is selected to establish an end-to-end network communication connection.

In S202, a 3D headgear sticker is selected to decorate a character in the interface by using the 3D headgear sticker.

Here the 3D headgear sticker is the elastic object.

In a possible implementation, the 3D headgear sticker may decorate an own side character or an adverse side character in the interface.

In a possible implementation, after the user selects a 3D headgear sticker, a face tracking function is activated, and the 3D headgear is displayed on the human face.

In S203, simulation physical parameters of the elastic object are set, and an elastic body simulation solver is initiated.

Here, the simulation physical parameters of the elastic object may specifically be the scale parameter mentioned above for completing the mapping operation, or the predetermined mesh points used as the action point, or the predetermined gravity at the mesh points of the elastic object, the elastic constraint between the mesh points, or the like.

The elastic body simulation solver is used to implement S120 to S 130 in Figure 1 of the present disclosure in response to the user performing a touch sliding operation on the 3D headgear sticker.

In S204, in response to the touch sliding operation applied by the user on the headgear, the elastic body simulation solver obtains and sends the deformation positions and the velocities of the mesh points in the mesh model of the headgear at respective motion moments to the user of the opposite terminal.

Exemplarily, the information about the sliding of the user on the screen is recognized, and the elastic body simulation solver determines an action point located in the mesh model of the headgear based on the sliding information, and then obtains the deformation positions and the velocities of the mesh points in the mesh model at respective motion moments. The deformation positions and the velocities of the mesh points in the mesh model at respective motion moments are used as special effect data and sent to the user of the opposite terminal.

In S205, the local terminal and/or the opposite terminal relocates the face, and renders the deformation of the headgear on a screen based on the received special effect data, so as to present a realistic dynamic elastic effect for the users.

With the above technical solution, the interest in the interaction for both parties in the call can be increased, thus improving the user experience.

In a possible implementation, S204 to S205 may be repeatedly performed multiple times during the entire video call.

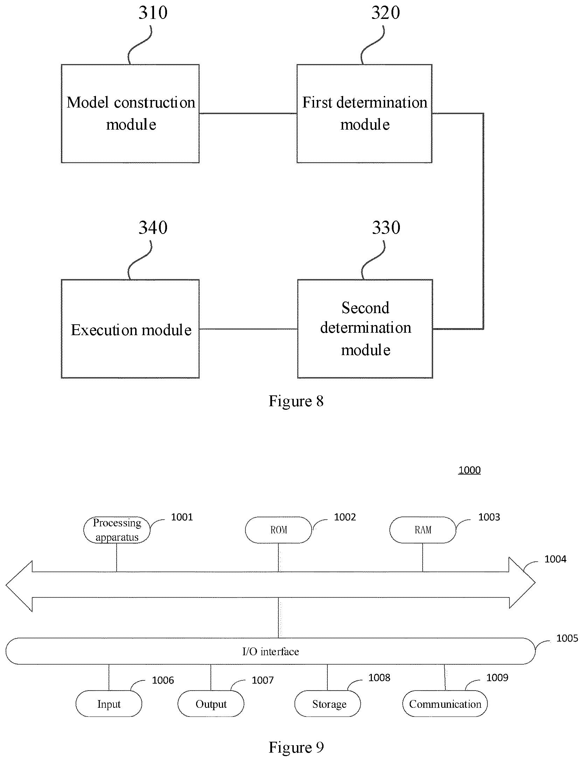

A rendering apparatus is further provided according to an embodiment of the present disclosure. For ease of understanding, the following description is made with reference to the rendering apparatus shown in Figure 8. Figure 8 is a structural block diagram of a rendering apparatus according to an embodiment of the present disclosure.

Reference is made to Figure 8. The rendering apparatus includes a model construction module 310, a first determination module 320, a second determination module 330 and an execution module 340.

The model construction module 310 is configured to construct a mesh model of an elastic object.

The first determination module 320 is configured to determine, in response to a deformation triggering operation applied on the elastic object, a deformation position and a velocity of an action point in the mesh model of the elastic object under action of the deformation triggering operation, where the deformation triggering operation is used to trigger a deformation of the elastic object under the action, and the action point is a mesh point in the elastic object that deviates from an original position under the action.

The second determination module 330 is configured to determine a motion trajectory of mesh points in the mesh model of the elastic object based on the deformation position and the velocity of the action point and an elastic constraint between the mesh points in the mesh model of the elastic object.

The execution module 340 is configured to implement an elastic movement of the mesh model of the elastic object based on the motion trajectory of the mesh points in the mesh model of the elastic object.

In a possible implementation, the deformation triggering operation includes a touch sliding operation, a touch point corresponding to the touch sliding operation is used to determine the action point, and a sliding trajectory corresponding to the touch sliding operation is used to determine the deformation position and the velocity of the action point.

In a possible implementation, in a case that the touch point corresponding to the touch sliding operation is not located on the elastic object, the action point is a predetermined mesh point on the mesh model of the elastic object.

In a possible implementation, in a case that the touch point corresponding to the touch sliding operation is located on the elastic object, the action point is a mesh point corresponding to the touch point on the mesh model.

In a possible implementation, the first determination module 320 includes:
a first determination sub-module, configured to: when the user performs the touch sliding operation, map a sliding velocity and a sliding distance applied by the user to the action point, to obtain the deformation position and the velocity of the action point.

In a possible implementation, the first determination module 320 further includes:
a second determination sub-module, configured to determine the velocity and the deformation position of the action point after the touch operation is stopped based on the velocity and the deformation position of the action point at a moment when the touch operation is stopped.

In a possible implementation, the second determination sub-module includes:
a first determination sub-unit, configured to determine the velocity and the position of the action point after the touch operation is stopped, based on the deformation position and the velocity of the action point at the moment when the touch operation is stopped and a predetermined gravity at the action point.

In a possible implementation, the second determination sub-module includes:
a second determination sub-unit, configured to determine force information of the action point at the deformation position based on the deformation position of the action point at the moment when the touch operation is stopped and an elastic constraint between the action point and other mesh points; and
a third determination sub-unit, configured to determine the velocity and the deformation position of the action point after the touch operation is stopped based on the deformation position, the velocity and the force information of the action point at the moment when the touch operation is stopped.

In a possible implementation, the third determination sub-unit is configured to:
determine the deformation position, the velocity and the force information of the action point at a moment based on the deformation position, the velocity and the force information of the action point at a previous moment, after the touch operation is stopped.

Since the rendering apparatus according to the embodiments of the present disclosure can be used to execute the method for rendering an elastic object according to any one of the embodiments of the present disclosure, the rendering apparatus has the same or corresponding advantageous effects as the executable rendering method, which is not repeated herein.

A terminal device is further provided according to an embodiment of the present disclosure. The terminal device includes a processor and a memory, where computer programs are stored in the memory, and the computer programs, when being executed by the processor, may perform the method according to any one of the embodiments described in Figure 1 to Figure 7.

Exemplarily, Figure 9 is a schematic structural diagram of a terminal device according to an embodiment of the present disclosure. Hereinafter reference is made to Figure 9 which shows a schematic structural diagram of a terminal device 1000 suitable for implementing the embodiments of the present disclosure. The terminal device 1000 according to the embodiments of the present disclosure may include, but not limited to, mobile terminals such as a mobile phone, a notebook computer, a digital broadcast receiver, a personal digital assistance (PDA), a portable android device (PAD), a portable media player (PMP) and a vehicle terminal (such as a vehicle navigation terminal); and fixed terminals such as digital television (TV) and a desktop computer. The terminal device shown in Figure 9 is exemplary, and is not intended to limit the function and usage scope of the embodiments of the present disclosure.

As shown in Figure 9, the terminal device 1000 may include a processing apparatus (such as a central processor and a graphic processor) 1001. The processing apparatus may perform various appropriate actions and processing based on programs stored in a read-only memory (ROM) 1002 or programs uploaded from a storage apparatus 1008 to a random access memory (RAM) 1003. Various programs and data required for operations of the terminal device 1000 are also stored in the RAM 1003. The processing apparatus 1001, the ROM 1002 and the RAM 1003 are connected to each other through the bus 1004. An input/output (I/O) interface 1005 is also connected to the bus 1004.

Generally, the following apparatuses may be connected to the I/O interface 1005: an input apparatus 1006 such as a touch screen, a touch panel, a keyboard, a mouse, a camera, a microphone, an accelerometer, and gyroscope; an output apparatus 1007 such as a liquid crystal display (LCD), a loudspeaker and a vibrator; a storage apparatus 1008 such as a magnetic tape and a hard disk; and a communication apparatus 1009. The communication apparatus 1009 may allow the terminal device 1000 to communicate with other device in a wired or wireless manner to exchange data. Although Figure 9 shows the terminal device 1000 provided with various apparatuses, it should be understood that not all shown apparatuses are required to be implemented or included. Alternatively, more or less apparatuses may be implemented or included.

According to the embodiments of the present disclosure, a process described with reference to the flowchart above may particularly be implemented by computer software programs. For example, according to an embodiment of the present disclosure, a computer program product including computer program carried on a non-transitory computer readable medium is provided. The computer program includes program codes for performing the method shown in the flowchart. In such embodiment, the computer program may be downloaded and installed from the network through the communication apparatus 1009, installed from the storage apparatus 1008 or installed from the ROM 1002. The computer program is executed by the processing apparatus 1001 to perform functions defined in the methods described in the embodiments of the present disclosure.

It should be noted that, the computer readable medium described in the present disclosure may be a computer readable signal medium, a computer readable storage medium or any combination thereof. The computer readable storage medium may include but not limited to a system, an apparatus or a device in an electric, magnetic, optical, electromagnetic, infrared or a semiconductor form, or any combination thereof. The computer readable storage medium may include but not limited to electric connection of one or more wires, a portable computer magnetic disk, a hard disk, a random access memory (RAM), a read-only memory (ROM), an erasable programmable read only memory (EPROM or a flash memory), an optical fiber, a portable compact disk read only memory (CD-ROM), an optical storage device, a magnetic storage device or any appropriate combination thereof. In the present disclosure, the computer readable storage medium may be a tangible medium including or storing programs. The programs may be used by an instruction execution system, apparatus or device, or may be used in combination with the instruction execution system, apparatus or device. In the present disclosure, a computer readable signal medium may include a data signal in a baseband or propagated as a part of carrier. The computer readable signal medium carries computer readable program codes. The propagated data signal may be in a variety of forms, and include but not limited to an electromagnetic signal, an optical signal or any appropriate combination thereof. The computer readable signal medium may further be any computer readable medium other than the computer readable storage medium. The computer readable signal medium may send, propagate or transmit programs used by the instruction execution system, apparatus or device or the programs used in combination with the instruction execution system, apparatus or device. The program code embodied in the computer readable medium may be transmitted via any appropriate medium, including but not limited to an electric wire, an optical fiber, radio frequency (RF) or any appropriate combination thereof.

In some embodiments, the client device and the server may perform communication by using any known network protocol such as Hyper Text Transfer Protocol (HTTP) or any network protocol to be developed in the further, and may connect with digital data communication in any form or carried in any medium (for example, a communication network). Examples of the communication network include a local area network (LAN), a wide area network (WAN), Internet, and an end-to-end network (such as, ad hoc end-to-end network), and any currently known or future developed network.

The computer readable medium may be included in the terminal device, or may stand alone without being assembled into the electronic device.

The computer readable medium carries one or more programs. The one or more programs, when executed by the terminal device, cause the terminal device to perform the following operations: constructing a mesh model of an elastic object; determining, in response to a deformation triggering operation applied on the elastic object, a deformation position and a velocity of an action point in the mesh model of the elastic object under action of the deformation triggering operation, where the deformation triggering operation is used to trigger a deformation of the elastic object under the action, and the action point is a mesh point in the elastic object that deviates from an original position under the action; determining a motion trajectory of mesh points in the mesh model of the elastic object based on the deformation position and the velocity of the action point and an elastic constraint between the mesh points in the mesh model of the elastic object; and implementing an elastic movement of the mesh model of the elastic object based on the motion trajectory of the mesh points in the mesh model of the elastic object.

Computer program codes for performing operations of the present disclosure may be written by using one or more program design language or any combination. The program design language includes but not limited to object oriented program design language such as Java, Smalltalk and C++, and further includes conventional process-type program design language such as "C" or similar program design language. The program codes may be completely or partially executed on a user computer, performed as an independent software packet, partially executed on the user computer and partially executed on a remote computer, or completely executed on the remote computer or a server. In a case of involving the remote computer, the remote computer may connect to the user computer via any type of network such as a local area network (LAN) and a wide area network (WAN). Alternatively, the remote computer may connect to an external computer (such as achieving internet connection by services provided by the internet network service provider).

The flowcharts and block diagrams in the drawings illustrate architecture, function and operation which may be implemented by the system, method and computer program product according to the embodiments of the present disclosure. Each block in the flowcharts or the block diagram may represent a module, a program segment or part of codes including executable instruction(s) for implementing specified logic functions. It should be noted that, in some alternative implementations, the functions marked in blocks may be performed in an order different from the order shown in the drawings. For example, two blocks shown in succession may actually be executed in parallel, or sometimes may be executed in a reverse order, which depends on the functions involved. It should also be noted that each block in the block diagram and/or flow chart and a combination of the blocks in the block diagram and/or flow chart may be implemented by a dedicated hardware-based system that performs specified functions or operations, or may be realized by a combination of dedicated hardware and computer instructions.

The units mentioned in the description of the embodiments of the present disclosure may be implemented by means of software or otherwise by means of hardware. A name of the units does not constitute a limitation to the units in some case.

The functions described above herein may be at least partially performed by one or more hardware logic components. For example, the hardware logic components may include but not limited to: a field programmable gate array (FPGA), an application specific integrated circuit (ASIC), an application specific standard product (ASSP), a system on chip (SOC), a complex programmable logic device (CPLD) and so on.

In the context of the present disclosure, the machine readable medium may be a tangible medium including or storing programs, which may be used by an instruction execution system, apparatus or device, or may be used in combination with the instruction execution system, apparatus or device. The machine readable medium may be a machine readable signal medium or a machine readable storage medium. The machine readable medium may include but not limited to a system, an apparatus or a device in an electric, magnetic, optical, electromagnetic, infrared or a semiconductor form, or any combination thereof. The machine readable storage medium may include but not limited to electric connection of one or more wires, a portable computer magnetic disk, a hard disk, a random access memory (RAM), a read-only memory (ROM), an erasable programmable read only memory (EPROM or a flash memory), an optical fiber, a portable compact disk read only memory (CD-ROM), an optical storage device, a magnetic storage device or any appropriate combination thereof.

A computer readable storage medium is further provided according to an embodiment of the present disclosure. Computers programs are stored in the storage medium and, when being executed by a processor, may perform the method according to any one of the embodiments described in Figure 1 to Figure 7. The implementation and the advantageous effects are similar to the method and are not repeated herein.

It should be noted that the relational terms "first", "second" and the like in the description are used for distinguishing an entity or operation from another entity or operation, but not intended to require or imply an actual relationship or order between these entities or operations. In addition, terms of "include", "comprise" or any other variants are intended to be non-exclusive. Therefore, a process, method, article or device including multiple elements includes not only the elements but also other elements that are not enumerated, or also include the elements inherent for the process, method, article or device. Unless expressively limited otherwise, a process, method, article or device limited by "comprising/including a(n) ..." does not exclude existence of another identical element in such process, method, article or device.

The above are only specific implementations of the present disclosure, so that those skilled in the art can understand or implement the present disclosure. It is obvious for those skilled in the art to make many modifications to these embodiments. The general principle defined herein may be applied to other embodiments without departing from the sprit or scope of the present disclosure. Therefore, the present disclosure is not limited to the embodiments illustrated herein, but should be defined by the broadest scope consistent with the principle and novel features disclosed herein.

## Claims

1. A method for rendering an elastic object, comprising:
constructing a mesh model of the elastic object;
determining, in response to a deformation triggering operation applied on the elastic object, a deformation position and a velocity of an action point in the mesh model of the elastic object under action of the deformation triggering operation, wherein the deformation triggering operation is used to trigger a deformation of the elastic object under the action, and the action point is a mesh point in the elastic object that deviates from an original position under the action;
determining, based on the deformation position and the velocity of the action point together with an elastic constraint between the mesh points in the mesh model of the elastic object, a motion trajectory of mesh points in the mesh model of the elastic object; and
implementing, based on the motion trajectory of the mesh points in the mesh model of the elastic object, an elastic movement of the mesh model of the elastic object.

2. The method according to claim 1, wherein the deformation triggering operation comprises a touch sliding operation, a touch point corresponding to the touch sliding operation is used to determine the action point, and a sliding trajectory corresponding to the touch sliding operation is used to determine the deformation position and the velocity of the action point.

3. The method according to claim 2, wherein in a case that the touch point corresponding to the touch sliding operation is not located on the elastic object, the action point is a predetermined mesh point on the mesh model of the elastic object.

4. The method according to claim 2, wherein in a case that the touch point corresponding to the touch sliding operation is located on the elastic object, the action point is a mesh point corresponding to the touch point on the mesh model.

5. The method according to claim 2, wherein the determining a deformation position and a velocity of an action point in the mesh model of the elastic object under action of the deformation triggering operation comprises:
when the user performs the touch sliding operation, mapping a sliding velocity and a sliding distance applied by the user to the action point, to obtain the deformation position and the velocity of the action point.

6. The method according to claim 5, wherein the determining a deformation position and a velocity of an action point in the mesh model of the elastic object under action of the deformation triggering operation comprises:
determining, based on the velocity and the deformation position of the action point at a moment when the touch operation is stopped, the velocity and the deformation position of the action point after the touch operation is stopped.

7. The method according to claim 6, wherein the determining, based on the velocity and the deformation position of the action point at a moment when the touch sliding operation is stopped, the velocity and the deformation position of the action point after the touch sliding operation is stopped comprises:
determining, based on the deformation position and the velocity of the action point at the moment when the touch operation is stopped together with a predetermined gravity at the action point, the velocity and the position of the action point after the touch operation is stopped.

8. The method according to claim 6, wherein the determining, based on the velocity and the deformation position of the action point at a moment when the touch operation is stopped, the velocity and the deformation position of the action point after the touch operation is stopped comprises:
determining, based on the deformation position of the action point at the moment when the touch operation is stopped together with the elastic constraint between the action point and other mesh points, force information of the action point at the deformation position; and
determining, based on the deformation position, the velocity and the force information of the action point at the moment when the touch operation is stopped, the velocity and the deformation position of the action point after the touch operation is stopped.

9. The method according to claim 8, wherein the determining, based on the deformation position, the velocity and the force information of the action point at the moment when the touch operation is stopped, the velocity and the deformation position of the action point after the touch operation is stopped comprises:
determining, based on the deformation position, the velocity and the force information of the action point at a previous moment, the deformation position, the velocity and the force information of the action point at a moment, after the touch operation is stopped.

10. A rendering apparatus comprising:
a model construction module, configured to construct a mesh model of an elastic object;
a first determination module, configured to determine, in response to a deformation triggering operation applied on the elastic object, a deformation position and a velocity of an action point in the mesh model of the elastic object under action of the deformation triggering operation, wherein the deformation triggering operation is used to trigger a deformation of the elastic object under the action, and the action point is a mesh point in the elastic object that deviates from an original position under the action;
a second determination module, configured to determine, based on the deformation position and the velocity of the action point together with an elastic constraint between the mesh points in the mesh model of the elastic object, a motion trajectory of mesh points in the mesh model of the elastic object; and
an execution module, configured to implement, based on the motion trajectory of the mesh points in the mesh model of the elastic object, an elastic movement of the mesh model of the elastic object.

11. The apparatus according to claim 10, wherein the deformation triggering operation comprises a touch sliding operation, a touch point corresponding to the touch sliding operation is used to determine the action point, and a sliding trajectory corresponding to the touch sliding operation is used to determine the deformation position and the velocity of the action point.

12. The apparatus according to claim 11, wherein in a case that the touch point corresponding to the touch sliding operation is not located on the elastic object, the action point is a predetermined mesh point on the mesh model of the elastic object.

13. The apparatus according to claim 11, wherein in a case that the touch point corresponding to the touch sliding operation is located on the elastic object, the action point is a mesh point corresponding to the touch point on the mesh model.

14. The apparatus according to claim 11, wherein the first determination module comprises:
a first determination sub-module, configured to: when the user performs the touch sliding operation, map a sliding velocity and a sliding distance applied by the user to the action point, to obtain the deformation position and the velocity of the action point.

15. The apparatus according to claim 14, wherein the first determination module further comprises:
a second determination sub-module, configured to determine, based on the velocity and the deformation position of the action point at the moment when the touch operation is stopped, the velocity and the deformation position of the action point after the touch operation is stopped.

16. The apparatus according to claim 15, wherein the second determination sub-module comprises:
a first determination sub-unit, configured to determine, based on the deformation position and the velocity of the action point at the moment when the touch operation is stopped together with a predetermined gravity at the action point, the velocity and the position of the action point after the touch operation is stopped.

17. The apparatus according to claim 15, wherein the second determination sub-module comprises:
a second determination sub-unit, configured to determine, based on the deformation position of the action point at the moment when the touch operation is stopped together with the elastic constraint between the action point and other mesh points, force information of the action point at the deformation position; and
a third determination sub-unit, configured to determine, based on the deformation position, the velocity and the force information of the action point at the moment when the touch operation is stopped, the velocity and the deformation position of the action point after the touch operation is stopped.

18. The apparatus according to claim 17, wherein the third determination sub-unit is configured to:
determine, based on the deformation position, the velocity and the force information of the action point at a previous moment, the deformation position, the velocity and the force information of the action point at a moment, after the touch operation is stopped.

19. A terminal device, comprising:
a memory and a processor, wherein computer programs are stored in the memory, and the computer programs, when being executed by the processor, cause the processor to perform the method according to any one of claims 1 to 9.

20. A computer-readable storage medium having computer programs stored thereon, wherein the computer programs, when being executed by a processor, cause the processor to perform the method according to any one of claims 1 to 9.

21. A computer program product configured to, when being executed on a terminal device, cause the terminal device to perform the method according to any one of claims 1 to 9.
